# EUROPEAN PATENT APPLICATION

(11) **EP 2 955 281 A1**
(43) Date of publication of application: **16.12.2015**
(21) Application number: 13874281.2
(22) Date of filing: 08.02.2013
(51) Int. Cl.: E02F 9/20, E02F 9/02

(54) **CONSTRUCTION EQUIPMENT DRIVING CONTROL METHOD**

(71) Applicant: Volvo Construction Equipment AB, 631 85 Eskilstuna (SE)
(72) Inventor: LEE, Chun-Han, Gimhae-si Gyeongsangnam-do 621-785 (KR)
(74) Representative: Zimmermann, Tankred Klaus
(86) International application number: PCT/KR2013/001046
(87) International publication number: WO 2014/123264

(57) **Abstract**

Disclosed is a construction equipment driving control method for controlling machine driving without using an additional straight driving pedal. According to the present invention, the construction equipment driving control method is applied to construction equipment comprising: right and left driving operation devices; a controller; right and left driving motors; right and left forward driving proportional solenoid valves; right and left backward driving proportional solenoid valves; and a setting means for setting the function for moving a machine forward or backward by the operation of the driving operation device, and the method comprises: a first step for moving the machine forward or backward by controlling the right and left driving motors correspondingly to the operation amount of operation pedals if one operation pedal among the driving operation devices is operated after a mode is converted into an activation mode by the operation of the setting means; and a second step for driving or converting, in the driving direction, the machine by controlling the right and left driving motors correspondingly to the operation amounts of the operation pedals of the driving operation devices if the pedals are simultaneously operated after a mode is converted into an inactivation mode by the operation of the setting means.

## Description

### TECHNICAL FIELD

The present invention relates to a traveling control method for a construction machine. More particularly, the present invention relates to a traveling control method for a construction machine, which can control the traveling of the machine without using a separate straight travel pedal.

### BACKGROUND OF THE INVENTION

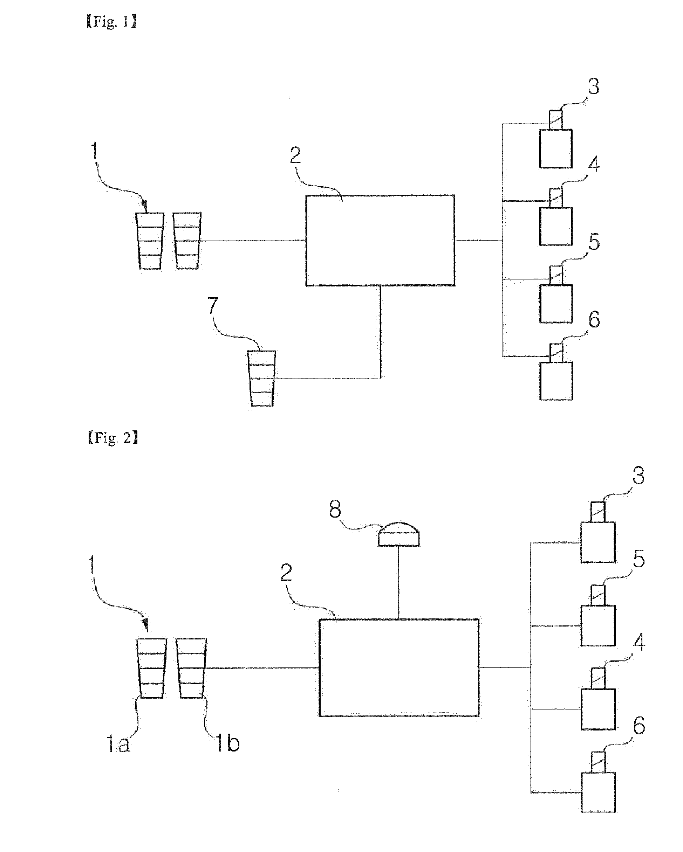

A traveling apparatus of a construction machine as shown in Fig. 1 includes:
a traveling manipulation device 1;
a controller 2 that computes and outputs an electrical control signal in response to a manipulation signal of the traveling manipulation device 1;
left and right traveling switching valves (not shown) configured to control the flow direction of hydraulic fluid supplied from a hydraulic pump (not shown) to left and right traveling motors (not shown);
an electronic proportional valve 3 for left forward traveling and an electronic proportional valve 4 for right forward traveling, which output secondary control signals to the left and right traveling switching valves in response to the electrical control signal that is output from the controller 2 so as to allow the machine to forward travel;
an electronic proportional valve 5 for left backward traveling and an electronic proportional valve 6 for right backward traveling, which output secondary control signals to the left and right traveling switching valves in response to the electrical control signal that is output from the controller 2 so as to allow the machine to forward travel; and
a straight travel pedal 7 configured to output a manipulation signal to the controller 2 so as to allow the machine to straight travel through the simultaneous manipulation of the electronic proportional valve 3 for left forward traveling and the electronic proportional valve 4 for right forward traveling.

As described above, a traveling control valve of the prior art has an advantage in that an operator manipulates the straight travel pedal 7 using his or her one foot to control the traveling of the machine during a long-distance traveling or a combined operation in which a traveling apparatus and a working apparatus are manipulated simultaneously so that a convenience can be provided to the operator.

On the other hand, the number of parts is increased due to the traveling manipulation device 1 for manipulating a caterpillar excavator to allow the machine to travel and the separate straight travel pedal 7 for allowing the machine to straight travel, thus leading to an increase in the manufacturing cost. In addition, there is caused a problem in that a front space of an operator's seat is reduced due to the installation of the traveling manipulation device 1 and the straight travel pedal 7, which makes it difficult to efficiently utilize the reduced front space of the operator's seat.

### SUMMARY OF THE INVENTION

Accordingly, the present invention has been made to solve the aforementioned problems occurring in the prior art, and it is an object of the present invention to provide a traveling control method for a construction machine, in which any one of left and right traveling manipulation pedals is manipulated to control the traveling of the machine so that a separate straight travel pedal is unnecessary, thus leading to a reduction in the number of parts, and a narrow internal space of an operator's cab can be usefully utilized.

### TECHNICAL SOLUTION

To achieve the above object, in accordance with an embodiment of the present invention, there is provided a traveling control method for a construction machine, which is applied to the construction machine including a lower traveling structure, an upper swing structure swingably mounted on the lower traveling structure, an operator's cab and a working apparatus, which are mounted on the upper swing structure, a traveling manipulation device manipulated to move forward and backward for the traveling and direction change of the machine, a controller configured to compute and output a control signal in response to a manipulation signal of the traveling manipulation device, left and right traveling motors configured to allow the machine to travel in accordance with the manipulation of the traveling manipulation device 1, electronic proportional valves for left and right forward traveling, which are configured to output secondary control signals in response to the control signal that is output from the controller so as to allow the machine to forward travel, electronic proportional valves for left and right backward traveling, which are configured to output secondary control signals in response to the control signal output from the controller so as to allow the machine to backward travel, and a setting means configured to set a function of allowing the machine to forward or backward travel through the manipulation of the traveling manipulation device, the traveling control method including:
a first step of allowing the machine to forward or backward travel by controlling the left and right traveling motors so as to correspond to a manipulation amount of any one of manipulation pedals of the traveling manipulation device if any one of the manipulation pedals is manipulated after the operating mode of the machine is switched to an active mode through the manipulation of the setting means; and
a second step of allowing the machine to travel or changing the traveling direction of the machine by controlling the left and right traveling motors so as to correspond to the manipulation amounts of the manipulation pedals of the traveling manipulation device if the manipulation pedals are simultaneously manipulated after the operating mode of the machine is switched to an inactive mode through the manipulation of the setting means.

In the traveling control method, if any one of the manipulation pedals of the traveling manipulation device is manipulated in a state where the operating mode of the machine is switched to the active mode through the manipulation of the setting means, the machine may move forward or backward, and if the left and right manipulation pedals of the traveling manipulation device are simultaneously manipulated, the operating mode of the machine may be switched from the active mode to the inactive mode.

In the traveling control method, if one of the manipulation pedals of the traveling manipulation device is manipulated in a state where the operating mode of the machine is switched to the active mode through the manipulation of the setting means, the machine may move forward or backward, and if the other of the operation pedals of the traveling manipulation device is manipulated, the manipulation signal may not be output.

In the traveling control method, if one of the manipulation pedals of the traveling manipulation device is manipulated in a state where the operating mode of the machine is switched to the active mode through the manipulation of the setting means, the machine may move forward or backward, and if the other of the manipulation pedals of the traveling manipulation device is manipulated, the machine may change the traveling direction thereof.

In the traveling control method, an electric joystick or a hydraulic joystick may be used as the traveling manipulation device 1.

In the traveling control method, the setting means may be provided in a function switch, a display device (I-ECU), or a cluster, which is installed in an operator's cab.

In the traveling control method, the left and right traveling motors may be track motors that drive caterpillar tracks mounted on the lower traveling structure.

### ADVANTAGEOUS EFFECT

The traveling control method for a construction machine in accordance with the present invention as constructed above has the following advantages.

The necessity for a high-cost electric straight travel pedal is eliminated so that the number of parts is reduced to decrease the manufacturing cost, and a pedal having an additional function can be installed at a front side of an operator' seat so that a space can be usefully utilized.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram showing a configuration of a traveling apparatus of a construction machine in accordance with the prior art;
Fig. 2 is a block diagram showing a configuration of a traveling apparatus used in a traveling control method for a construction machine in accordance with a preferred embodiment of the present invention; and
Fig. 3 is a flow chart showing a traveling control method for a construction machine in accordance with a preferred embodiment of the present invention.

### * Explanation on reference numerals of main elements in the drawings *

- 1:: engine
- 10:: hydraulic pedal
- 20, 30:: hydraulic joystick
- 40:: controller
- 50:: electronic proportional valve
- 60:: cluster
- 1;: traveling manipulation device
- 2;: controller
- 3;: electronic proportional valve for left forward traveling
- 4;: electronic proportional valve for right forward traveling
- 5;: electronic proportional valve for left backward traveling
- 6;: electronic proportional valve for right backward traveling
- 8;: setting means

### DETAILED DESCRIPTION OF THE INVENTION

Hereinafter, a traveling control method for a construction machine in accordance with a preferred embodiment of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

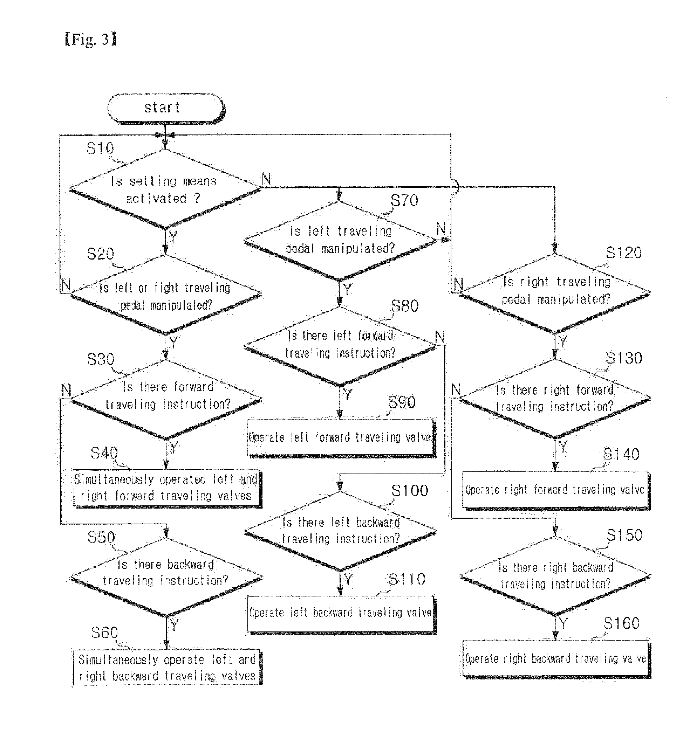

Fig. 2 is a block diagram illustrating a configuration of a control device used in a traveling control method for a construction machine in accordance with a preferred embodiment of the present invention, and Fig. 3 is a flow chart illustrating a traveling control method for a construction machine in accordance with a preferred embodiment of the present invention.

Referring to Figs. 2 and 3, in accordance with an embodiment of the present invention, there is shown a traveling control method for a construction machine, which is applied to the construction machine.

The construction machine includes a lower traveling structure, an upper swing structure that is swingably mounted on the lower traveling structure, an operator's cab and a working apparatus, which are mounted on the upper swing structure, a traveling manipulation device 1 that is manipulated to move forward and backward for the traveling and direction change of the machine, a controller 2 that computes and outputs a control signal in response to a manipulation signal of the traveling manipulation device 1, left and right traveling motors (not shown) that allow the machine to travel by hydraulic fluid supplied from a hydraulic pump (not shown) in accordance with the manipulation of the traveling manipulation device 1, electronic proportional valves 3 and 4 for left and right forward traveling, which output secondary control signals in response to the control signal that is output from the controller 2 so as to allow the machine to forward travel, electronic proportional valves 5 and 6 for left and right backward traveling, which output secondary control signals in response to the control signal output from the controller 2 so as to allow the machine to backward travel, and a setting means 8 that sets a function of allowing the machine to forward or backward travel through the manipulation of the traveling manipulation device 1.

The traveling control method of the present invention includes:
a first step (S10-S60) of moving the machine forward or backward by controlling the left and right traveling motors (not shown) so as to correspond to a manipulation amount of any one of manipulation pedals 1a and 1b of the traveling manipulation device 1 (i.e., left and right traveling manipulation pedals or lever) if any one of the manipulation pedals 1a and 1b is manipulated after the operating mode of the machine is switched to an active mode through the manipulation of the setting means 8; and
a second step (S70-S110; S120-160) of allowing the machine to travel or changing the traveling direction of the machine by controlling the left and right traveling motors so as to correspond to the manipulation amounts of the manipulation pedals 1a and 1b of the traveling manipulation device 1 if the manipulation pedals 1a and 1b are simultaneously manipulated after the operating mode of the machine is switched to an inactive mode through the manipulation of the setting means 8.

If any one of the manipulation pedals 1a and 1b of the traveling manipulation device 1 is manipulated in a state where the operating mode of the machine is switched to the active mode through the manipulation of the setting means 8, the machine can move forward or backward, and if the left and right manipulation pedals 1a and 1b of the traveling manipulation device 1 are simultaneously manipulated, the operating mode of the machine can be switched from the active mode to the inactive mode.

If one of the manipulation pedals 1a and 1b of the traveling manipulation device 1 is manipulated in a state where the operating mode of the machine is switched to the active mode through the manipulation of the setting means 8, the machine can move forward or backward, and if the other of the operation pedals 1a and 1b of the traveling manipulation device 1 is manipulated, the manipulation signal cannot be output.

If one of the manipulation pedals 1a and 1b of the traveling manipulation device 1 is manipulated in a state where the operating mode of the machine is switched to the active mode through the manipulation of the setting means 8, the machine can move forward or backward, and if the other of the manipulation pedals 1a and 1b of the traveling manipulation device 1 is manipulated, the machine can change the traveling direction thereof.

An electric joystick or a hydraulic joystick can be used as the traveling manipulation device 1.

The setting means 8 can be provided in a function switch, a display device (I-ECU), or a cluster, which is installed in an operator's cab.

The left and right traveling motors can be track motors that drive caterpillar tracks mounted on the lower traveling structure.

According to the configuration as described above, as shown in Fig. 3, when the setting means 8 is manipulated to switch the operating mode of the machine to an active mode, any one of the manipulation pedals 1a and 1b of the traveling manipulation device 1 can be manipulated to cause an caterpillar excavator to forward and backward travel.

In step S10, a manipulation signal according to the manipulation of the setting means 8 is output to the controller 2 so that the controller 2 determines whether or not the operating mode of the machine is switched to an active mode. If it is determined at step S10 that the operating mode of the machine is switched to the active mode, the program proceeds to step S20, and if it is determined at step S10 that the operating mode of the machine is switched to an inactive mode, the program proceeds to step S70 and S120.

In step S20, when a manipulation signal according to the manipulation of any one of the manipulation pedals 1a and 1b of the traveling manipulation device 1 is output to the controller 2, the controller 2 determines whether the left traveling manipulation pedal 1a is manipulated or the right traveling manipulation pedal 1b is manipulated. In other words, if it is determined at step S20 that any one of the manipulation pedals 1a and 1b of the traveling manipulation device 1 is manipulated, the program proceeds to step S30, and if it is determined at step S20 that the manipulation pedals 1a and 1b of the traveling manipulation device 1 are manipulated simultaneously, the program returns to step S10.

In step S30, the controller 2 determines whether there is a forward traveling instruction. If it is determined at step S30 that a forward traveling signal is input, the program proceeds to step S40, and if it is determined at step S30 that a backward traveling signal is input, the program proceeds to step S50.

In step 40, when the forward traveling signal is input by pressing the left or right manipulation pedal 1a or 1b so that the machine can travel forward, a control signal is output from the controller 2 so as to correspond to the manipulation amount of the left or right manipulation pedal 1a or 1b. In other words, when the control signal from the controller 2 is input to the electronic proportional valve 3 for left forward traveling and the electronic proportional valve 4 for right forward traveling, respectively, the electronic proportional valve 3 for left forward traveling and the electronic proportional valve 4 for right forward traveling generate secondary signals, which in turn allow the left traveling switching valve (not shown) and the right traveling switching valve (not shown) to be switched to a forward state.

Thus, hydraulic fluid discharged from a hydraulic pump is supplied to the left and right traveling motors via the left and right traveling switching valves so that the machine can forward travel.

In step S50, the controller 2 determines whether there is a backward traveling instruction. If it is determined at step S50 that a backward traveling signal is input, the program proceeds to step S60.

In step S60, when the backward traveling signal is input by pressing the left or right manipulation pedal 1a or 1b so that the machine can travel backward, a control signal is output from the controller 2 so as to correspond to the manipulation amount of the left or right manipulation pedal 1a or 1b. In other words, when the control signal from the controller 2 is input to the electronic proportional valve 5 for left backward traveling and the electronic proportional valve 6 for right backward traveling, respectively, the electronic proportional valve 5 for left backward traveling and the electronic proportional valve 6 for right backward traveling generate secondary signals, which in turn allow the left traveling switching valve (not shown) and the right traveling switching valve (not shown) to be switched to a backward state.

Thus, the hydraulic fluid discharged from the hydraulic pump is supplied to the left and right traveling motors via the left and right traveling switching valves so that the machine can backward travel.

As described above, in the case where the operating mode of the machine is switched to the active mode by the manipulation of the setting means 8, even when any one of the manipulation pedals 1a and 1b of the traveling manipulation device 1 is manipulated, the machine can travel so that a separate straight travel pedal in accordance with the prior art is unnecessary.

In steps S70 and S120, if the setting means 8 is not manipulated to switch the operating mode of the machine to the inactive mode, the manipulation pedals 1a and 1b of the traveling manipulation device 1 can be manipulated simultaneously so that the machine can travel forward or backward or the traveling direction thereof can be changed.

In step S70, the controller 2 determines whether or not the left traveling manipulation pedal 1a is manipulated in a condition where the setting means 8 is not manipulated to switch the operating mode of the machine to the inactive mode. If it is determined that a manipulation signal of the left traveling manipulation pedal 1a is input to the controller 2, the program proceeds to step S80, and if determined that the manipulation signal of the left traveling manipulation pedal 1a is not input to the controller 2, the program returns to step S90.

In step S80, the controller 2 determines whether there is a left forward traveling instruction. If it is determined that a left forward traveling signal is input to the controller 2, the program proceeds to step S90, and if it is determined that the left forward traveling signal is not input to the controller 2, the program proceeds to step S100.

In step S90, the left forward traveling signal is input to the controller 2 by pressing the left traveling manipulation pedal 1 a to cause the machine to forward travel in the left direction. In this case, a control signal is output from the controller 2 to correspond to a manipulation amount of the left traveling manipulation pedal 1a. In other words, when the control signal output from the controller 2 is input to the electronic proportional valve 3 for left forward traveling, the electronic proportional valve 3 for left forward traveling generates a secondary control signal to cause the left traveling switching valve to be switched to a forward state.

Thus, the hydraulic fluid discharged from the hydraulic pump is supplied to the left traveling motor via the left forward traveling switching valve so that the machine can forward travel in the left direction.

In step S100, the controller 2 determines whether there is a left backward traveling instruction. If it is determined that a left backward traveling signal is input to the controller 2, the program proceeds to step S110.

In step S110, the left backward traveling signal is input to the controller 2 by pressing the left traveling manipulation pedal 1 a to cause the machine to backward travel in the left direction. In this case, a control signal is output from the controller 2 to correspond to the manipulation amount of the left traveling manipulation pedal 1a. In other words, when the control signal output from the controller 2 is input to the electronic proportional valve 5 for left backward traveling, the electronic proportional valve 5 for left backward traveling generates a secondary control signal to cause the left traveling switching valve to be switched to a backward state.

Thus, the hydraulic fluid discharged from the hydraulic pump is supplied to the left traveling motor via the left backward traveling switching valve so that the machine can backward travel in the left direction.

In step S120, the controller 2 determines whether or not the right traveling manipulation pedal 1b is manipulated in a condition where the setting means 8 is not manipulated to switch the operating mode of the machine to the inactive mode. If it is determined that a manipulation signal of the right traveling manipulation pedal 1b is input to the controller 2, the program proceeds to step S130, and if determined that the manipulation signal of the right traveling manipulation pedal 1b is not input to the controller 2, the program returns to step S10.

In step S130, the controller 2 determines whether there is a right forward traveling instruction. If it is determined that a right forward traveling signal is input to the controller 2, the program proceeds to step S140, and if it is determined that the right forward traveling signal is not input to the controller 2, the program proceeds to step S150.

In step S140, the right forward traveling signal is input to the controller 2 by pressing the right traveling manipulation pedal 1b to cause the machine to forward travel in the right direction. In this case, a control signal is output from the controller 2 to correspond to a manipulation amount of the right traveling manipulation pedal 1a. In other words, when the control signal output from the controller 2 is input to the electronic proportional valve 3 for left forward traveling, the electronic proportional valve 4 for right forward traveling generates a secondary control signal to cause the right traveling switching valve to be switched to a forward state.

Thus, the hydraulic fluid discharged from the hydraulic pump is supplied to the right traveling motor via the right forward traveling switching valve so that the machine can forward travel in the right direction.

In step S150, the controller 2 determines whether there is a left backward traveling instruction. If it is determined that a right backward traveling signal is input to the controller 2, the program proceeds to step S160.

In step S160, the right backward traveling signal is input to the controller 2 by pressing the right traveling manipulation pedal 1b to cause the machine to backward travel in the right direction. In this case, a control signal is output from the controller 2 to correspond to the manipulation amount of the right traveling manipulation pedal 1b. In other words, when the control signal output from the controller 2 is input to the electronic proportional valve 6 for right backward traveling, the electronic proportional valve 6 for right backward traveling generates a secondary control signal to cause the right traveling switching valve to be switched to a backward state.

Thus, the hydraulic fluid discharged from the hydraulic pump is supplied to the right traveling motor via the right backward traveling switching valve so that the machine can backward travel in the right direction.

As described above, if the setting means 8 is not manipulated to switch the operating mode of the machine to the inactive mode, the manipulation pedals 1a and 1b of the traveling manipulation device 1 can be manipulated simultaneously so that the machine can travel forward or backward or the traveling direction thereof can be changed. In this case, a configuration in which the machine travels forward or backward or the traveling direction thereof is changed by driving the left and right traveling motors according to the manipulation of the manipulation pedals 1a and 1b is well known in the technical field to which the present invention pertains, and thus a detailed description thereof will be omitted to avoid redundancy.

In the meantime, after the operating mode of the machine is switched to the active mode by the manipulation of the setting means 8, one of the manipulation pedals 1a or 1b of the traveling manipulation device 1 can be manipulated to cause the machine to forward or backward travel. In this case, when the other of the manipulation pedals 1a or 1b of the traveling manipulation device 1 is manipulated, a corresponding manipulation signal is not output. For this reason, a safety accident can be prevented from occurring due to a manipulation confusion of the manipulation pedals 1a and 1b during the traveling of the machine.

In addition, if one of the manipulation pedals 1a and 1b of the traveling manipulation device 1 is manipulated in a state where the operating mode of the machine is switched to the active mode through the manipulation of the setting means 8, the machine can travel forward or backward, and if the other of the manipulation pedals 1a and 1b of the traveling manipulation device 1 is manipulated, the machine can change the traveling direction thereof. Thus, one of the manipulation pedals 1a and 1b of the traveling manipulation device 1 is manipulated to cause the traveling direction of the machine to be changed so that a convenience can be provided to an operator.

### INDUSTRIAL APPLICABILITY

In accordance with the traveling control method for a construction machine of the present invention as constructed above, the traveling of the machine can be controlled without using a separate straight travel pedal so that the number of parts can be reduced and a narrow space within the operator's cab can be usefully utilized.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A traveling control method for a construction machine, which is applied to the construction machine including a lower traveling structure, an upper swing structure swingably mounted on the lower traveling structure, an operator's cab and a working apparatus, which are mounted on the upper swing structure, a traveling manipulation device manipulated to move forward or backward for the traveling and direction change of the machine, a controller configured to compute and output a control signal in response to a manipulation signal of the traveling manipulation device, left and right traveling motors configured to allow the machine to travel in accordance with the manipulation of the traveling manipulation device, electronic proportional valves for left and right forward traveling, which are configured to output secondary control signals in response to the control signal that is output from the controller so as to allow the machine to forward travel, electronic proportional valves for left and right backward traveling, which are configured to output secondary control signals in response to the control signal output from the controller so as to allow the machine to backward travel, and a setting means configured to set a function of allowing the machine to forward or backward travel through the manipulation of the traveling manipulation device, the traveling control method comprising:
a first step of allowing the machine to forward or backward travel by controlling the left and right traveling motors so as to correspond to a manipulation amount of any one of manipulation pedals 1a and 1b of the traveling manipulation device 1 if any one of the manipulation pedals 1a and 1b is manipulated after the operating mode of the machine is switched to an active mode through the manipulation of the setting means 8; and
a second step of allowing the machine to travel or changing the traveling direction of the machine by controlling the left and right traveling motors so as to correspond to the manipulation amounts of the manipulation pedals of the traveling manipulation device if the manipulation pedals are simultaneously manipulated after the operating mode of the machine is switched to an inactive mode through the manipulation of the setting means.

2. The traveling control method according to claim 1, wherein if any one of the manipulation pedals of the traveling manipulation device is manipulated in a state where the operating mode of the machine is switched to the active mode through the manipulation of the setting means, the machine moves forward or backward, and if the left and right manipulation pedals of the traveling manipulation device are simultaneously manipulated, the operating mode of the machine is switched from the active mode to the inactive mode.

3. The traveling control method according to claim 1, wherein if one of the manipulation pedals of the traveling manipulation device is manipulated in a state where the operating mode of the machine is switched to the active mode through the manipulation of the setting means, the machine moves forward or backward, and if the other of the operation pedals of the traveling manipulation device is manipulated, the manipulation signal is not output.

4. The traveling control method according to claim 1, wherein if one of the manipulation pedals of the traveling manipulation device is manipulated in a state where the operating mode of the machine is switched to the active mode through the manipulation of the setting means, the machine moves forward or backward, and if the other of the manipulation pedals of the traveling manipulation device is manipulated, the machine changes the traveling direction thereof.

5. The traveling control method according to claim 1, wherein an electric joystick or a hydraulic joystick is used as the traveling manipulation device 1.

6. The traveling control method according to claim 1, wherein the setting means 8 is provided in a function switch, a display device (I-ECU), or a cluster, which is installed in an operator's cab.

7. The traveling control method according to claim 1, wherein the left and right traveling motors are track motors that drive caterpillar tracks mounted on the lower traveling structure.
